# EUROPEAN PATENT SPECIFICATION

(11) **EP 2 032 589 B1**
(45) Date of publication and mention of the grant of the patent: **28.09.2011**
(21) Application number: 07721836.0
(22) Date of filing: 07.06.2007
(51) Int. Cl.: C07F 9/22, C05C 9/00, C07C 43/11

(54) **SOLVENT SYSTEM FOR THE PREPARATION OF N-ALKYL THIOPHOSPHORIC TRIAMIDE SOLUTIONS, COMPOSITION CONTAINING N-ALKYL THIOPHOSPHORIC TRIAMIDE AND THE USE THEREOF**
LÖSUNGSMITTELSYSTEM FÜR DIE HERSTELLUNG VON N-ALKYLTHIOPHOSPHORSÄURETRIAMIDLÖSUNGEN, N-ALKYLTHIOPHOSPHORSÄURETRIAMID ENTHALTENDE ZUSAMMENSETZUNG UND DEREN VERWENDUNG
SYSTÈME SOLVANT POUR LA PRÉPARATION DE SOLUTIONS DE N-ALKYL TRIAMIDE THIOPHOSPHORIQUE, COMPOSITION CONTENANT UN N-ALKYL TRIAMIDE THIOPHOSPHORIQUE ET SON UTILISATION

(30) Priority: 28.06.2006 CZ 20060422
(43) Date of publication of application: 11.03.2009
(73) Proprietor: Agra Group, A.S., 387 15 Strelske Hostice (CZ)
(72) Inventor: CIGLER, Petr, 370 00 Ceske Budejovice (CZ)
(74) Representative: Gabrielova, Marta
(86) International application number: PCT/CZ2007/000047
(87) International publication number: WO 2008/000196

(56) References cited:
- WO-A-97/22568
- US-A1- 2005 192 319
- R. L. SMITH: "Review of glycol ether and glycol ether ester solvents used in the coating industry" ENVIRONMENTAL HEALTH PERSPECTIVES, vol. 57, 1984, pages 1-4, XP002455427

## Description

### Technical Field

The invention relates to the compositions containing N-alkyl thiophosphoric triamide and the use of these compositions.

### Background Art

Urea constitutes 46 % of the worldwide consumption of nitrogen in agriculture and is the most widely used nitrogen fertilizer. However, after its application to soil, its partial hydrolysis to yield ammonia and carbon dioxide occurs. This process is catalysed by the enzyme urease, which is produced by some bacteria and fungi. The gaseous product formed by the hydrolysis reaction (ammonia and carbon dioxide) volatilize to the atmosphere and thus, substantial losses from the total amount of the nitrogen applied to the field occur.

The hydrolysis process can be considerably decelerated by urease inhibitors that are applied together with urea. Among the most effective urease inhibitors are the thiophosphoric triamide compounds disclosed in the US Pat. No. 4,530,714, above all N-(n-butyl)thiophosphoric triamide (NBPT). The use of NBPT was experimentally verified and this compound is now industrially available for the use in agriculture (Watson, C.J. (2005) Proc. Internat. Fertiliser Soc. 454, 1-38).

Industrial grade N-(n-butyl)thiophosphoric triamide (NBPT) is a solid, waxy compound, which decomposes by the action of moisture and elevated temperature. With regard to its consistence, its direct application onto urea particles is very difficult. Technologically more advantageous is the use of the NBPT solutions in a suitable solvent, which should comply with some basic requirements: high solubility and stability of NBPT in the solvent, resistance of the NBPT solutions against the crystallization at a low temperature, low viscosity of the concentrated solutions of NBPT, low toxicity, volatility and flammability, minimum content of water in the commercially available form of the solvent, low coast.

In the US Pat. No. 5,698,003, mixtures of N-(n-butyl)thiophosphoric triamide (NBPT) and aliphatic diols and triols or their esters are described, containing up to 50 wt. % of NBPT, preferably 20 - 30 wt. % NBPT. These mixtures are suitable for the impregnation of granular urea, but they are liquid only at the temperatures above 15 °C. Below this temperature, they solidify or crystallize. This undesired property renders the manipulation with the solutions and their application to granular urea in the course of its production, particularly during the cold periods of the year, when the temperature can fall deep below 0 °C. US 5,698,003 teaches that the addition of the so-called "liquid amides"(e.g. 10 wt. % of N-methylpyrrolidone) to these solvent can shift the solidification temperature to 0 °C. The liquid amides, however, are health-deleterious (N-methylpyrrolidone is often classified among carcinogenic and teratogenic compounds) and the solidifying temperature achieved is still not sufficient for the manipulation at low temperatures or at freezing.

Another issue is the technical quality and hygroscopicity of the commercially available diols and triols. They often contain few tenths of percent of water and this amount can further increase during storage due to the hygroscopicity of the solvents. During a longer storage period, the presence of water causes the decomposition of N-(n-butyl) thiophosphoric triamide (NBPT) into non-effective substances and is the main cause of the NBPT degradation during a long-term storage. The instability of NBPT towards hydrolysis is well known, e.g. because of it, NBPT is poorly utilizable on moist soils.

The above mentioned disadvantages can be solved by the solvent systems according to the present invention.

### Disclosure of the Invention

Object of the present invention is a composition containing N-alkyl thiophosphoric triamide, which contains at least one N-alkyl thiophosphoric triamide and a solvent system containing one or more glycol ethers of the general formula I 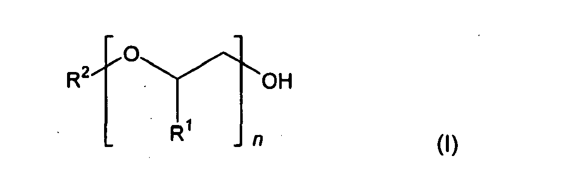 wherein R¹ is hydrogen or methyl, R² is selected from the group consisting of C₁-C₆ alkyl, C₃-C₆ isoalkyl, C₄-C₆ tertiary alkyl, n = 2-4.

The composition may further contain auxiliary substances improving the stability and applicability properties of the solutions.

The alkyl group of N-alkyl thiophosphoric triamides is selected from the group comprising linear or branched alkyl chains having 1 to 8 carbon atoms and cycloalkyl chains having 3 to 8 carbon atoms.

From the group of glycol ethers of the general formula I, preferably diethyleneglycol monomethylether, dipropyleneglycol monomethylether, triethyleneglycol monomethylether and diethyleneglycol monobutylether can be used. The most preferred solvent is diethyleneglycol monomethylether.

The auxiliary substances improving the stability and applicability properties of the solutions can be crystallization inhibitors, surface active agents or colouring agents.

In a preferred embodiment, polyvinylpyrrolidone or N-methylpyrrolidone can be used as the crystallization inhibitors.

Preferable, polyvinylpyrrolidone in the concentration range of from 0.01 to 5 wt. % is used as the crystallization inhibitor. This compound in non-toxic and is used in similar concentrations e.g. in medicine as the additive to eye-drops.

For the indication of homogeneity of the coating of a solid urea-containing fertilizer (e.g. granular urea) by the solution of N-alkyl thiophosphoric triamide, common agricultural or food colouring agents can be added into the solvent system.

For achieving a sufficient coating of the surface of a solid urea-containing fertilizer (e.g. granular urea) by the solution of N-alkyl thiophosphoric triamide, surface active agents commonly used in agriculture can be added into the solvent system.

In a preferred embodiment, the N-alkyl thiophosphoric triamide is N-(n-butyl) thiophosphoric triamide.

Preferably, the composition of the present invention contains 1 to 50 wt. % of N-(n-butyl) thiophosphoric triamide.

More preferably, the composition of the present invention contains 10 to 40 wt. % of N-(n-butyl) thiophosphoric triamide.

Most preferably, the composition of the present invention contains 20 to 30 wt. % of N-(n-butyl) thiophosphoric triamide.

A further object of the present invention is the use of the composition containing N-alkyl thiophosphoric triamide as an urease inhibitor in urea-containing fertilizers. The urea-containing fertilizers can be solid, then the composition of the present invention can be added into the mixture for the manufacture of these fertilizers, or the fertilizer particles, e.g. granules, can be impregnated by the composition of the invention. In another embodiment of the invention, the urea-containing fertilizer can be liquid, then the composition of the present invention can be admixed to the liquid fertilizer.

The solvent systems of the present invention show properties, which are advantageous for the application in agriculture: a high concentration of N-(n-butyl) thiophosphoric triamide (NBPT) in the solution can be achieved in these solvent systems, and NBPT is stabilized in these solutions by the solvent systems of the invention.

The solvent systems of the present invention show a high resistance against solidifying and crystallization in comparison with the solvent systems known in the art, even at very low temperatures (-20 °C). They are miscible with water, not toxic, show a very low volatility and flammability. Thanks to their solvent and chemical properties, the solvent systems of the invention are suitable for impregnation of granular urea. A further advantage is that the commercially available technical grade components of the solvent systems of the invention contain a minimum amount of water - in the order of hundredth of percent - and they are available at low cost.

The invention is further illustrated by the following examples, which should not be construed as further limiting.

### Examples

### Example 1

The solutions of N-(n-butyl) thiophosphoric triamide (NBPT) in the solvent systems of the present invention have, in contrast to the solvent systems known in the art, the capability to remain liquid at very low temperatures. This capability is due to, the chemical nature of the solvents and can be further improved by the presence of polyvinylpyrrolidone in the solution as the crystallization inhibitor. In this example, the improvement of the flowability of the concentrated solutions of NBPT and lowering the crystallization point of NBPT with the use of the solvent system of the present invention in comparison with the systems known in the art is shown.

The concentration of technical-grade NBPT in the solutions was 25 wt. %. For testing, the temperature -20 °C was selected, which allowed for direct assessment of the behavior of the solutions under the storage conditions corresponding to the temperature regime of the cold months of the year. The solutions were examined after four months of storage. The results are summarized in Table 1. The flowability was assessed visually as the following grades: excellent, good, bad. Further, the presence of NBPT crystals in the solution was examined (yes-no). In case of the presence of the crystals in the solution, the flowability was not assessed.

The following glycol ethers were selected for testing:
dipropyleneglycol monomethylether (MDPG)
diethyleneglycol monomethylether (MDGE)
triethyleneglycol monomethylether (MTGE)
diethyleneglycol monobutylether (BDGE)

Polyvinylpyrrolidone (PVP) and N-methyl pyrrolidone (NMP) were used as the crystallization inhibitors. For comparison with the state of art, the mixture containing propylene glycol (PG) as the solvent and 10 wt. % of N-methyl pyrrolidone (NMP) described in the US Pat. No. 5,698,003 was used.

The results show that MDGE is the optimal solvent for NBPT with regard to the stability of the solution at low temperatures. The crystallization of NBPT from the solution does not occur at -20 °C. The presence of the crystallization inhibitor is not necessary for maintaining NBPT in this solution, nevertheless, its use does not adversely affect the flowability of the solution.

The results for MDPG show the positive effect of polyvinylpyrrolidone, which at the concentration of 1 wt. % completely inhibits the crystallization.

A suitable solvent is also MTGE, in which NBPT does not crystallize at -20 °C at the concentration of polyvinylpyrrolidone being 0.1 wt. %. necessary for maintaining NBPT in this solution, nevertheless, its use does not adversely affect the flowability of the solution.

The results for MDPG show the positive effect of polyvinylpyrrolidone, which at the concentration of 1 wt. % completely inhibits the crystallization.

A suitable solvent is also MTGE, in which NBPT does not crystallize at -20 °C at the concentration of polyvinylpyrrolidone being 0.1 wt. %.

**Table 1: Effect of the composition of the solvent systems on the flowability and on the crystallization of NBPT from its solutions at the temperature of -20 °C.**

| *Crystallization inhibitor* | *Concentration of the crystallization inhibitor [wt. %]* | *MDPG* | | *MDGE* | | *MTGE* | | *BDGE* | | *PG* | |
|---|---|---|---|---|---|---|---|---|---|---|---|
| | | flowability | crystallization | flowability | crystallization | flowability | crystallization | flowability | crystallization | flowability | crystallization |
| - | - | - | yes | excellent | no | - | yes | - | yes | - | yes |
| PVP | 0.1 | - | yes | excellent | no | good | no | N/A | N/A | N/A | N/A |
| PVP | 0.25 | - | yes | excellent | no | good | no | N/A | N/A | N/A | N/A |
| PVP | 0.5 | - | yes | excellent | no | good | no | N/A | N/A | N/A | N/A |
| PVP | 0.75 | - | yes | excellent | no | bad | no | N/A | N/A | N/A | N/A |
| PVP | 1 | good | no | excellent | no | bad | no | N/A | N/A | N/A | N/A |
| NMP | 10 | excellent | no | excellent | no | good | no | N/A | N/A | - | yes |

| | | | | | | | | | | | |
|---|---|---|---|---|---|---|---|---|---|---|---|
| N/A - not determined | | | | | | | | | | | |

### Example 2

In this example, the improvement of the flowability of the concentrated solutions of N-(n-butyl) thiophosphoric triamide (NBPT) and the lowering of the crystallization point of NBPT with the use of the solvent system of the present invention at -5 °C is described.

The concentration of technical-grade NBPT in the solutions was 25 wt. %. The solutions were examined after four months of storage. The results are summarized in Table 2. The flowability was assessed visually as the following grades: excellent, good, bad. Further, the presence of NBPT crystals in the solution was examined (yes-no). In case of the presence of the crystals in the solution, the flowability was not assessed.

The following glycol ethers were selected for testing:
dipropyleneglycol monomethylether (MDPG)
diethyleneglycol monomethylether (MDGE)
triethyleneglycol monomethylether (MTGE)
diethyleneglycol monobutylether (BDGE)

Polyvinylpyrrolidone (PVP) and N-methyl pyrrolidone (NMP) were used as the crystallization inhibitors. For comparison with the state of art, the mixture containing propylene glycol (PG) as the solvent and 10 wt. % of N-methyl pyrrolidone (NMP) described in the US Pat. No. 5,698,003 was used.

The results are almost identical to the results obtained for the temperature of -20 °C (Example 1), only in the case of MDPG, polyvinylpyrrolidone inhibits the crystallization already at the concentration of 0.75 wt. %, and in the case of BDGE, the crystallization does not occur at the temperature of -5 °C, whereas the flowability of the solution is excellent.

**Table 2: Effect of the composition of the solvent systems on the flowability and on the crystallization of NBPT from its solutions at the temperature of -5 °C.**

| *Crystallization inhibitor* | *Concentration of the crystallization inhibitor [wt. %]* | *MDPG* | | *MDGE* | | *MTGE* | | *BDGE* | | *PG* | |
|---|---|---|---|---|---|---|---|---|---|---|---|
| | | flowability | crystallization | flowability | crystallization | flowability | crystallization | flowability | crystallization | flowability | crystallization |
| - | - | - | yes | excellent | no | - | yes | excellent | no | - | yes |
| PVP | 0,1 | - | yes | excellent | no | good | no | N/A | N/A | N/A | N/A |
| PVP | 0,25 | - | yes | excellent | no | good | no | N/A | N/A | N/A | N/A |
| PVP | 0,5 | - | yes | excellent | no | good | no | N/A | N/A | N/A | N/A |
| PVP | 0,75 | good | no | excellent | no | bad | no | N/A | N/A | N/A | N/A |
| PVP | 1 | good | no | excellent | no | bad | no | N/A | N/A | N/A | N/A |
| NMP | 10 | excellent | no | excellent | no | good | no | N/A | N/A | - | yes |

| | | | | | | | | | | | |
|---|---|---|---|---|---|---|---|---|---|---|---|
| N/A - not determined | | | | | | | | | | | |

### Example 3

### Stability of the solutions in time

A high stability of N-(n-butyl) thiophosphoric triamide (NBPT) in the solvent system is the key issue for the long-term storage of its solutions. During a longer storage period, the presence of water causes the decomposition of N-(n-butyl)thiophosphoric triamide (NBPT) into non-effective substances and is the main cause of the NBPT degradation during the long-term storage.

The solvent systems of the present invention show a stabilizing effect towards NBPT. All glycol ethers used in this example are commercially available in very good quality (the content of water does not exceed the concentration of 0.05 wt. %). Nevertheless, to confirm the stabilization effect of the solvents, the content of water was artificially increased to 1 wt. %. The thus adjusted solvent systems simulate the effect of the moisture on NBPT (higher contents of the moisture than 1 wt. % are uncommon).

For the verification of the long-term stability of NBPT solutions in glycol ethers containing 1 wt. % of water, the following glycol ethers were selected:
dipropyleneglycol monomethylether (MDPG)
diethyleneglycol monomethylether (MDGE)
triethyleneglycol monomethylether (MTGE)

The solutions of NBPT in these solvents having the concentration ca 20 wt. % (weighed portion) were stored at room temperature at daylight in glass, well-sealed vials.

The determination of the content of NBPT in individual terms was carried out by reverse-phase HPLC with UV detection in the mobile phase containing 25 vol. % acetonitrile and 75 vol. % 0.005M ammonium acetate. The chromatogram was evaluated at the wavelength of 193 nm. The mobile phase flow was 1 ml/min, the column temperature was 40 °C. The injected volume was 5 µl. The evaluation was carried out by the method of external standard with the calibration using a calibration line. The results are summarized in Tab. 3.

**Table 3: Summary of the results (in wt. %) of the determination of the NBPT content in the time t = 0 (immediately after the preparation of the solution), in the time t₁ = 1 week and in the time t₂ = 12 weeks after the dissolution. In the parentheses, the interval showing the confidence range of the analysis is given.**

| Solvent | Content of NBPT [wt. %] | | |
|---|---|---|---|
| | 0 weeks | 1 week | 12 weeks |
| MDPG | **20.63** (20.34-20.92) | **19.91** (19.75-20.07) | **20.4** (20.02-20.75) |
| MDGE | **21.03** (21.00 - 21.06 | **19.97** (19.68 - 20.26) | **20.6** (20.50-20.66) |
| MTGE | **21.72** (21.62 - 21.82) | **20.57** (20.27 - 20.87) | **21.1** (20.82-21.36) |

The results show that the solvent systems of the present invention have a stabilizing effect towards NBPT, even at the water content of 1 wt. %. After twelve weeks of storage, no evidential decrease of the content of the active component NBPT occurred in any sample (the method used can determine the change at least 1 wt. %).

### Industrial applicability

The solutions of N-alkyl thiophosphoric acid triamides in the solvent systems of the present invention can be long-term stored, used for the impregnation of solid urea-containing fertilizers, such as e.g. granular urea, added into the mixture for the manufacture of solid urea-containing fertilizers or added into liquid urea-containing fertilizers.

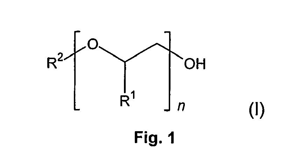

## Claims

1. A composition containing N-alkyl thiophosphoric triamide, **characterized in that** it contains at least one N-alkyl thiophosphoric triamide and a solvent system containing one or more glycol ethers of the general formula I 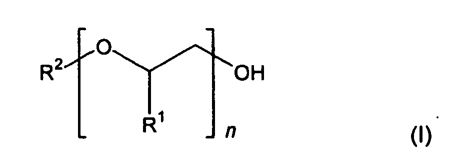 wherein R¹ is hydrogen or methyl, R² is selected from the group consisting of C₁-C₆ alkyl, C₃-C₆ isoalkyl, C₄-C₆ tertiary alkyl, *n* = 2-4.

2. The composition according to claim 1, **characterized in that** the glycol ethers are selected from the group comprising diethyleneglycol monomethylether, dipropyleneglycol monomethylether, triethyleneglycol monomethylether and diethyleneglycol monobutylether.

3. The composition according to claim 2, **characterized in that** the glycol ether is diethyleneglycol monomethylether.

4. The composition according to any of claims 1 to 3, **characterized in that** it further contains auxiliary substances improving the stability and applicability properties of the solutions.

5. The composition according to claim 4, **characterized in that** it contains crystallization inhibitors, surface active agents or colouring agents as the auxiliary substances.

6. The composition according to claim 5, **characterized in that** it contains polyvinylpyrrolidone or N-methylpyrrolidone as the crystallization inhibitors.

7. The composition according to claim 6, **characterized in that** it contains polyvinylpyrrolidone in the concentration range of from 0.01 to 5 wt. % as the crystallization inhibitor.

8. The composition according to any of claims 1 to 7, **characterized in that** the N-alkyl thiophosphoric triamide is N-(n-butyl) thiophosphoric triamide.

9. The composition according to claim 8, **characterized in that** it contains 1 to 50 wt. % of N-(n-butyl) thiophosphoric triamide.

10. The composition according to claim 9, **characterized in that** it contains 10 to 40 wt. % of N-(n-butyl) thiophosphoric triamide.

11. The composition according to claim 10, **characterized in that** it contains 20 to 30 wt. % of N-(n-butyl) thiophosphoric triamide.

12. Use of the composition containing N-alkyl thiophosphoric triamide according to any of claims 1 to 11 as an urease inhibitor in urea-containing fertilizers.

13. The use according to claim 12, wherein the urea-containing fertilizer is solid.

14. The use according to claim 13, wherein the solid urea-containing fertilizer is granular.

15. The use according to claim 12, wherein the urea-containing fertilizer is liquid.

## Patentansprüche

1. Eine Zusammensetzung enthaltend N-Alkylthiophosphor-triamid, **dadurch gekennzeichnet, dass** sie mindestens ein N-Alkylthiophosphor-triamid und ein Lösungsmittel-System mit einem oder mehreren Glykolether der allgemeinen Formel I, 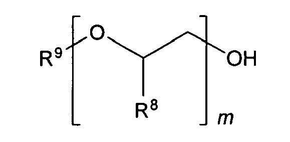 worin R¹ Wasserstoff oder Methyl ist, R² aus der Gruppe bestehend aus C₁-C₃-Alkyl, C₃-C₆ Isoalkyl, C₄-C₆ tertiäre Alkyl ausgewählt ist, n = 2-4 ist, enthält.

2. Die Zusammensetzung nach Anspruch 1, **dadurch gekennzeichnet, dass** die Glykolether aus der Gruppe umfassend Diethylenglykolmonomethyläther, Dipropylenglykolmonomethyläther, Triethylenglykolmonomethyläther und Diethylenglykolmonobutyläther, ausgewählt sind.

3. Die Zusammensetzung nach Anspruch 2, **dadurch kennzeichnet, dass** der Glykoläther der Diethylenglykolmonomethyläther ist.

4. Die Zusammensetzung gemäß den Ansprüchen 1 bis 3, **dadurch gekennzeichnet, dass** sie weitere Hilfsstoffe, welche die Stabilitäts- und Anwendungseigenschaften der Lösungen verbessern, enthält.

5. Die Zusammensetzung nach Anspruch 4, **dadurch gekennzeichnet, dass** sie Kristallisationsinhibitoren, Tenside oder Farbstoffe als Hilfsstoffe enthält.

6. Die Zusammensetzung nach Anspruch 5, **dadurch gekennzeichnet, dass** sie Polyvinylpyrrolidon oder N-methylpyrrollidon als Kristallisationsinhibitoren enthält.

7. Die Zusammensetzung nach Anspruch 6, **dadurch gekennzeichnet, dass** sie Polyvinylpyrrolidon in einem Konzentrationsbereich von 0,01 bis 5 Gew. % als Kristallisationsinhibitor enthält.

8. Die Zusammensetzung gemäß den Ansprüchen 1 bis 7, **dadurch gekennzeichnet, dass** das N-Alkylthiophosphor-triamid das N-(n-Butyl)-thiophosphortriamid ist.

9. Die Zusammensetzung nach Anspruch 8, **dadurch gekennzeichnet, dass** sie 1 bis 50 Gew. % von N-(n-Butyl)-thiophosphor-triamid enthält.

10. Die Zusammensetzung nach Anspruch 9, **dadurch gekennzeichnet, dass** sie 10 bis 40 Gew. % N-(n-Butyl)-thiophosphor-triamid enthält.

11. Die Zusammensetzung nach Anspruch 10, **dadurch gekennzeichnet, dass** sie 20 bis 30 Gew. % N-(n-Butyl)-thiophosphor-triamid enthält.

12. Anwendung der Zusammensetzung, die das N-Alkylthiophosphor-triamid enthält, nach einem der Ansprüche 1 bis 11, als Ureaseinhibitor in Harnstoff-Enthaltenden Düngemitteln.

13. Die Anwendung nach Anspruch 12, wobei der harnstoffhaltige Dünger fest ist.

14. Die Anwendung nach Anspruch 13, wobei der feste harnstoffhaltige Dünger körnig ist.

15. Die Anwendung nach Anspruch 12, wobei der harnstoffhaltige Dünger flüssig ist.

## Revendications

1. Composition contenant un N-alkyl triamide thiophosphorique **caractérisée en ce qu'**elle contient au moins un N-alkyl triamide thiophosphorique et un système solvant comprenant un ou plusieurs éthers de glycol de formule générale I 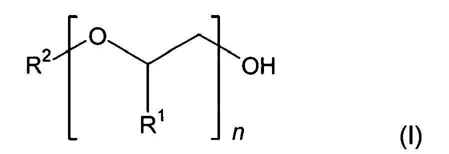 dans laquelle R¹ représente l'hydrogène ou le méthyle, R² est choisi du groupe consistant de C₁-C₆ alkyle, C₃-C₆ isoalkyle, C₄-C₆ alkyle tertiaire, n = 2-4.

2. Composition selon la revendication 1 **caractérisée en ce que** les éthers de glycol sont choisis du groupe comprenant le diéthylène glycol monométhyléther, le dipropylène glycol monométhyléther, le triéthylène glycol monométhyléther et le diéthylène glycol monobutyléther.

3. Composition selon la revendication 2 **caractérisée en ce que** l'éther de glycol est le diéthylène glycol monométhyléther.

4. Composition selon l'une quelconque des revendications 1 à 3 **caractérisée en ce qu'**elle contient en plus des agents auxiliaires améliorant la stabilité et les propriétés d'application des solutions.

5. Composition selon la revendication 4 **caractérisée en ce qu'**elle contient des inhibiteurs de cristallisation, des tensioactifs ou des colorants comme agents auxiliaires.

6. Composition selon la revendication 5 **caractérisée en ce qu'**elle contient la polyvinyl pyrrolidone ou la N-méthyl pyrrolidone comme inhibiteurs de cristallisation.

7. Composition selon la revendication 6 **caractérisée en ce qu'**elle contient la polyvinyl pyrrolidone en concentration comprise entre 0,01 et 5 % en poids comme inhibiteur de cristallisation.

8. Composition selon l'une quelconque des revendications 1 à 7 **caractérisée en ce que** le N-alkyl triamide thiophosphorique est un N-(n-butyl) triamide thiophosphorique.

9. Composition selon la revendication 8 **caractérisée en ce qu'**elle contient 1 à 50 % en poids du N-(n-butyl) triamide thiophosporique.

10. Composition selon la revendication 9 **caractérisée en ce qu'**elle contient 10 à 40 % en poids du N-(n-butyl) triamide thiophosphorique.

11. Composition selon la revendication 10 **caractérisée en ce qu'**elle contient 20 à 30 % en poids du N-(n-butyl) triamide thiophosphorique.

12. Utilisation de la composition contenant le N-alkyl triamide thiophosphorique selon l'une quelconque des revendications 1 à 11 comme inhibiteur d'uréase dans les fertilisants contenant l'urée.

13. Utilisation selon la revendication 12 dans laquelle le fertilisant comprenant l'urée est solide.

14. Utilisation selon la revendication 13 dans laquelle le fertilisant solide comprenant l'urée est granulé.

15. Utilisation selon la revendication 12 dans laquelle le fertilisant comprenant l'urée est liquide.
